(19) Europäisches Patentamt
European Patent Office
Office européen des brevets

(11) EP 1 561 786 A1

(12) EUROPEAN PATENT APPLICATION
published in accordance with Art. 158(3) EPC

(43) Date of publication:
**10.08.2005 Bulletin 2005/32**

(21) Application number: **03707181.8**

(22) Date of filing: **28.02.2003**

(51) Int Cl.[7]: **C08L 79/08**, C08G 73/22

(86) International application number:
**PCT/JP2003/002343**

(87) International publication number:
**WO 2004/035689 (29.04.2004 Gazette 2004/18)**

(84) Designated Contracting States:
**DE FR GB IT NL**

(30) Priority: **16.10.2002 JP 2002301700**
**16.10.2002 JP 2002301702**

(71) Applicant: **PI R & D Co., Ltd.**
**Yokohama-shi, Kanagawa 236-0002 (JP)**

(72) Inventor: **ITATANI, Hiroshi**
**Yokohama-shi, Kanagawa 236-0005 (JP)**

(74) Representative: **MacLean, Martin Robert et al**
**Mathys & Squire**
**120 Holborn**
**London EC1N 2SQ (GB)**

(54) **SOLUTION COMPOSITIONS OF BLOCK COPOLYIMIDES COMPRISING PYROMELLITIC DIANHYDRIDE AND PROCESS FOR PRODUCTION THEREOF**

(57) Polyimides consisting of PMDA and an aromatic diamine are normally solvent-insoluble. According to the present invention, they are solubilized in solvents to prepare four-component or higher block copolymers containing BTDA. PMDA is reacted with a certain type of aromatic diamine in a molar ratio of 1:2-1.5 to produce a solvent-soluble oligomer. This is combined with an acid dianhydride and an aromatic diamine to produce a four-component or higher solvent-soluble block copolymer.

The molar ratio of the aromatic diamine added with PMDA is 1:2-1.5. A number of solvent-soluble block copolymers containing PMDA can be prepared.

Four-component or higher polyimide block copolymers containing PMDA, BTDA, and DAT are prepared by sequential reactions in the presence of a binary catalyst. This made it possible to prepare various polyimides from many inexpensively available materials. Polyimides containing PMDA-BTDA-DAT can be prepared at high performance, in mass and at low cost by using economical direct imidation, and therefore can be widely used in future.



Printed by Jouve, 75001 PARIS (FR)

**Description**

FIELD OF THE INVENTION

The present invention relates to solvent-soluble polyimides containing pyromellitic dianhydride, or solvent-soluble polyimides containing pyromellitic dianhydride, benzophenonetetracarboxylic dianhydride and diaminotoluene. More specifically, it relates to four-component or higher polyimide block copolymer solution compositions obtained by polycondensation, especially sequential polymerization reactions under the action of an acid catalyst in a polar solvent, and processes for the preparation thereof.

PRIOR ART

Polyimides are known as a class of materials resistant to high temperatures for a long period, and are widely used as electric/electronic components in the aerospace industry and other fields because of their high electric insulation, mechanical strength and chemical resistance. Especially in the current semiconductor industry, they are essential materials.

Various polyimides are currently known, among which polyimides consisting of pyromellitic dianhydride (hereinafter referred to as PMDA) and 4,4'-diaminodiphenyl ether (hereinafter referred to as DADE) are well-known as the first commercialized polyimides.

It is known that aromatic polyimides are normally solvent-insoluble and that polyimides based on PMDA especially have low solubility in solvents. Thus, conventional processes for synthesizing polyimides typically involve reacting PMDA and DADE in a polar solvent such as N-methylpyrrolidone or N,N-dimethylacetamide at a low temperature to synthesize a polyamic acid (polyimide precursor), which is a polycondensation product having a high molecular weight and a high viscosity, and heating it at 250-350°C to give a polyimide via dehydration and ring-closing reactions (See Polyimide; D. Wilson, H. D. Steinberger, P. M. Morgenrother; Blackie (New York) 1990).

Polyamic acids are unstable to heat in solutions and readily decompose in water. Thus, they have poor storage stability and should be frozen-stored. Polyamic acids undergo rapid intermolecular interactions in polar solvents, and even attempts to modify their behavior by adding other components have little effect and result in random copolymers. Polyamic acids undergo changes even at room temperature, so that the molecular weight measurements by GPC are not reproducible. Thus, polyamic acids are identified by measuring their intrinsic viscosities instead of molecular weights.

Solvent-soluble polyimides can be directly prepared by imidation reactions in solutions without the intermediation of polyamic acids. Imidation is carried out by heating at 160-200°C in the presence of an acid catalyst such as sulfuric acid or P-toluenesulfonic acid. After completion of the reaction, the acid catalyst remaining in the polyimide solution may cause deterioration of the polymer product. Therefore, the polyimide should be separated from the catalyst by precipitating out the polyimide and redissolving it.

Processes of the present invention use acid-base catalysts based on the equilibrium of lactone to promote dehydration-imidation reactions.

The binary catalyst systems consisting of γ-valerolactone and pyridine and/or N-methylmorpholine described in the specification of US Patent No. 5502143 can be used. As imidation proceeds, water is produced and contributes to the equilibrium of lactone to form an acid-base system showing a catalytic effect.

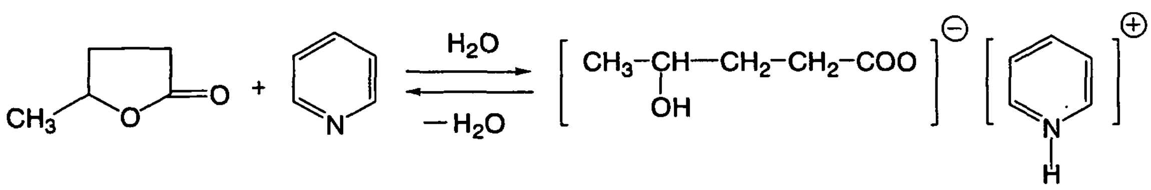


The water produced by imidation is removed from the reaction medium by azeotropic distillation with toluene or xylene coexisting with the polar solvent. When the reaction is completed, the solution is free from water and the acid-base system returns to γ-valerolactone and pyridine to give a high-purity polyimide solution from which water has been removed by azeotropic distillation with toluene or xylene.

Polyimides containing PMDA are normally solvent-insoluble. An object of the present invention is to allow

them to be solubilized in solvents, thereby producing four-component or higher solvent-soluble block copolymers.

Solvent-soluble polyimides can be formed into multicomponent polyimide block copolymer solutions using sequential reactions.

## DISCLOSURE OF THE INVENTION

An aspect of the present invention relates to four-component or higher polyimide block copolymer solution compositions containing pyromellitic dianhydride (hereinafter referred to as PMDA) and processes for the preparation thereof.

Another aspect of the present invention relates to polyimide block copolymer solution compositions containing pyromellitic dianhydride, benzophenonetetracarboxylic dianhydride (hereinafter referred to as BTDA) and diaminotoluene (hereinafter referred to as DAT) and processes for the preparation thereof.

## PREFERRED EMBODIMENTS OF THE INVENTION

Polyimides that are soluble in polar solvents such as N-methylpyrrolidone and N,N-dimethylacetamide are known. The solubilities of polyimides vary with the characteristics, compositions and combinations of acid dianhydrides and aromatic diamines.

The solvent solubilities of polyimide are discussed below. It is known that aliphatic polyimides are more readily soluble than aromatic polyimides and that fluorine-containing polyimides are also readily soluble in solvents.

The solubilities of polyimides containing acid dianhydrides decrease in the following order:

BCD>6FDA>>BTDA>BPDA>>PMDA
(BCD: bicyclo(2,2,2)-oct-7-ene-2,3,5,6-tetracarboxylic dianhydride,
6FDA: 2,2-bis (3,4-dicarboxyphenyl)-1,1,1,3,3,3-hexafluoropropane dianhydride ,
BTDA: 3,4,3',4'-benzophenonetetracarboxylic dianhydride,
BPDA: 3,4,3',4'-biphenyltetracarboxylic dianhydride.)

The solubilities of polyimides containing these acid dianhydrides decrease in this order. Especially, polyimides containing PMDA have low solubilities.

In view of the solubilities of different acid dianhydrides, polyimides containing PMDA showing the solubilities of aromatic polyimides are the most insoluble. Polyimides containing combinations of PMDA and BTDA can be formed into relatively large numbers of solvent soluble block polyimides by synthesizing the polyimides with certain types of diamines in appropriate ratios.

A document "Modern polyimides", by Imai and Yokota (eds.), NTS (2002) pp. 143-153 describes model molecules calculated by a molecular orbital method based on density functional theory (DFT) as a guideline for evaluating the solubilities of polyimides. The order of the electron-accepting ability of acid dianhydrides calculated by DFT, and the order of the electron-donating ability of diamines calculated by DFT, is shown.

PMDA has high electron-accepting ability. Evaluations of the electron-donating ability, steric bulk and steric strain of aromatic diamines are useful for selecting soluble polyimides.

Solvents that can be used in the preparation of polyimides include N-methylpyrrolidone, N-methylformamide, N,N-dimethylformamide,-N-methylacetamide, N,N-dimethylacetamide, tetramethylurea, dimethyl sulfoxide, and sulfolane. The amount of polyimides to be dissolved in these solvents is 10% by weight or more, preferably 15-25% by weight.

A hydrocarbon such as toluene or xylene is added to the polar solvents listed above.

The imidation reaction is promoted while removing the water produced during the reaction from the reaction medium by azeotropic distillation with the hydrocarbon.

One mole of PMDA and 2 moles of an aromatic diamine were added at a concentration of 15% by weight in an N-methylpyrrolidone solution (hereinafter referred to as NMP) and heated at 170-180°C or 170-175°C in the presence of an acid catalyst to form an imide oligomer. When the imide oligomer precipitates, the diamine can be selected from the list shown below.

List 1

1,4-diaminobenzene, 1,3-diaminobenzene, 3,5-diaminobenzoic acid, 2,4-diamino-1-methyl-S-triazine, 4,4'-diamino-3.3'-dimethylbiphenyl, 4,4'-diamino-3,3'-dimethoxybiphenyl, 4,4'-diamino-3,3'-dimethyldiphenyl sulfone, 1,5-diaminonaphthalene, 2,4-diaminophenol, 4,4'-diamino-3,3'-dihydroxybiphenyl, 3,4'-diaminodiphenyl ether, 4,4'-diaminodiphenyl ether, 4,4'-diaminodiphenyl methane, 4,4'-diaminodiphenyl sulfide, 4,4'-diaminodiphenyl sulfone, 4,4'-diaminobenzamide, bis (4-aminophenoxy)-1,4-benzene, 2,2-bis (4-(4-aminophenoxy)phenyl)propane, 2,2-bis (4-(4-aminophenoxy-)phenyl)hexafluoropropane, 4,4'-bis (4-aminophenoxy)diphenyl sulfone, 3,3'-diethyl-4,4'-diaminodiphenyl methane, and 4,4'-[1,4-phenylene-bis (1-methylethylidene)]bisaniline.

One mole of PMDA and 2 moles of an aromatic diamine were added at a concentration of 15% by weight in NMP and heated at 170-175°C in the presence of an acid catalyst. When the resulting polyimide oligomer is solubilized in the solution, the aromatic diamine can be selected from the list shown below.

List 2

2,4-diaminotoluene, bis- (3-aminophenoxy)-1,3-benzene, bis[(3-aminophenoxy)-1,4-phenyl] sulfone, 3,3'-diaminodiphenyl sulfone, 2,2-bis[3-amino-4-phenoxyphenyl]-hexafluoropropane, bis[3-amino-4-phenoxyphenyl] sulfone, 9,9-bis (4-aminophenyl)fluorene, 3,5-diaminobenzoic acid, and 4,4'-diamino-3,3'-dioxycarbonyl-diphenylmethane.

Compounds in List 1 produce insoluble polyimides via reactions with PMDA. List 2 shows diamine components producing soluble polyimides.

In the light of these facts, processes for preparing soluble polyimide block copolymers containing PMDA were searched.

A first process is shown below.

In the reaction of the first step, 1.5-2 moles of an aromatic diamine ($B_1$) shown in List 2 per mole of PMDA is added, and the mixture is heated at 160-180°C in the presence of an acid catalyst to produce an oligomer terminated with diamines at both ends.

$$\text{PMDA} + \text{B} \dashrightarrow \text{B (PMDA-B)}_m$$

wherein m=1 or 2 in most cases.

In the reaction of the second step, another acid dianhydride (A) and another diamine $B_2$ and/or $B_3$ are reacted to give a polyimide block copolymer solution.

$$\text{B (PMDA-B)}_m\text{+2A+B}_2 \rightarrow \text{-B (PMDA-B)}_n \text{ (A+B}_2\text{)A}$$

$$\text{-B (PMDA-B)}_m\text{+3A+B}_2\text{+B}_3 \rightarrow \text{B (PMDA+B)}_m \text{ (A-B}_2\text{) (A-B}_3\text{)A-}$$

wherein the molar ratio between the total acid dianhydrides and the total aromatic diamines is 1:1-0.95 i.e. the molar ratio of the total aromatic diamines to the total acid dianhydrides is 1-0.95.

The acid dianhydride used in the second step can be 6FDA, BTDA, BPDA, 3,4-dicarboxyphenyl sulfone anhydride, bis (3,4-dicarboxyphenyl) ether anhydride, 2,3,6,7-naphthalenetetracarboxylic anhydride, etc.

The aromatic diamine used in the second step in the present invention can be selected from the diamines shown in List 1 and List 2.

Another process for preparing a polyimide block copolymer is shown below. In the reaction of the first step, an acid dianhydride other than PMDA ($A_2$) and an aromatic diamine ($B_2$) are reacted. The molar ratio between $A_2$ and $B_2$ is 2:1. An oligomer terminated with acid dianhydrides at both ends is produced.

$$\text{A}_2\text{+B}_2 \dashrightarrow \text{A}_2 \text{ (B}_2\text{-A}_2\text{)}_m$$

wherein m=1 or 2.

The acid dianhydride used as $A_2$ can be 6FDA, BTDA, BPDA, 3,4-dicarboxyphenyl sulfone anhydride, bis (-3,4-dicarboxyphenyl) ether anhydride, 2,3,6,7-naphthalenetetracarboxylic anhydride, etc., and $B_2$ can be selected from List 1 and List 2.

In the reaction of the second step, PMDA and an aromatic diamine ($B_4$) are added. $B_4$ can be selected from List 1 and List 2. However, the $B_4$/PMDA molar ratio is 2-1.5/1.0.

$$\text{A}_2 \text{ (B}_2\text{-A}_2\text{)}_m\text{+PMDA+2B}_4\text{-}\dashrightarrow \text{[A}_2 \text{ (B}_2\text{-A}_2\text{)}_m \text{ (PMDA-B}_4\text{)B}_4\text{]-}$$

$$A_2 (B_2\text{-}A_2)_m\text{+2PMDA+3}B_4\text{-}\rightarrow[A_2 (B_2\text{-}A_2)_m (\text{PMDA-}B_4)_2B_4]\text{-}$$

The molar ratio between the total aromatic acid dianhydrides and the total aromatic diamines is 1:1-0.95, i.e. the molar ratio of the total aromatic diamines to the total aromatic acid dianhydrides is 1-0.95.
Still another process for preparing a polyimide block copolymer is shown below.
In the reaction of the first step, PMDA (1 mole) and diaminotoluene (DAT) (2-1.5 moles) are added to produce an oligomer terminated with diamines at both ends.

$$\text{PMDA+DAT--}\rightarrow\text{DAT (PMDA-DAT)}_m$$

wherein m=1 or 2.
In the reaction of the second step, BTDA and other diamines ($B_1$, $B_2$) are added to carry out an imidation reaction.

$$\text{DAT (PMDA-DAT)}_m\text{+2BTDA+}B_1\text{--}\rightarrow\text{-DAT (PMDA-DAT)}_m\text{ (BTDA-}B_1\text{)BTDA-}$$

$$\text{DAT (PMDA-DAT)}_m\text{+3BTDA+}B_1\text{+}B_2\text{--}\rightarrow\text{-DAT (PMDA-DAT) (BTDA-}B_1\text{) (BTDA-}B_2\text{)-BTDA-}$$

The molar ratio between the total acid dianhydrides and the total aromatic diamines is 1:1.00-0.95, i.e. the molar ratio of the total aromatic diamines to the total acid dianhydrides is 1.00-0.95, and $B_1$ and $B_2$ can be selected from List 1 and List 2.
In yet another synthesis process, BTDA and DAT can be used in the reaction of the first step.

$$\text{2BTDA+DAT--}\rightarrow\text{ (BTDA-DAT)BTDA}$$

An oligomer terminated with acid dianhydrides at both ends is produced.
In the reaction of the second step, PMDA and diamine $B_3$ are added to carry out an imidation reaction.
The molar ratio of diamine $B_3$ to PMDA is 1:1.5-2.0.

$$\text{BTDA (DAT-BTDA)+PMDA+2}B_3\text{--}\rightarrow\text{BTDA (DAT-BTDA) (}B_3\text{-PMDA)}B_3\text{-}$$

$$\text{BTDA (DAT-BTDA+2PMDA+3}B_3\text{)--}\rightarrow\text{-BTDA (DAT-PMDA)}_2B_3\text{-}$$

The molar ratio between the total dianhydrides and the total aromatic diamines is 1:1-0.95, i.e. the molar ratio of the total aromatic diamines to the total dianhydrides is 1-0.95.
Aromatic diamines used in place of DAT in (2BTDA+DAT) are shown below.

List 3

4,4-diaminodiphenyl sulfide,
bis[4- (3-aminophenoxy)phenyl]sulfone,
bis[4- (4-aminophenoxy)phenyl]sulfone,
2,2-bis[4- (4-aminophenoxy)phenyl]propane,

2,2-bis[4- (4-aminophenoxy)phenyl]hexafluoropropane,
9,9-bis (4-aminophenoxy)fluorene,
1,3-bis (3-aminophenoxy)benzene,
2,4-diaminophenol.

The aromatic diamine used in combination with PMDA in the second step can be selected from List 1 and List 2.
Polyimide block copolymer solutions containing PMDA, and polyimide block copolymer solutions containing PMDA, BTDA and DAT, are stable at room temperature and do not readily decompose even when water is added. Thus, the polyimides are readily reproducible with a precision of ±10% based on the molecular weights and molecular weight distributions determined by GPC.
These polyimide block copolymer solutions produce characteristic polyimides depending on their schemes and types. They can be used as polyimide films, insulating varnishes, electroplating polyimides, photosensitive polyimides, sealants, adhesives, etc. Polyimides prepared from inexpensively and readily available materials are provided at low production costs.
Condensation products of an aromatic diamine having an amino group and a hydroxy group in the ortho positions with an aromatic tetracarboxylic dianhydride do not consist of only hydroxypolyimide groups. In this case, polycondensation products containing imide group components and benzoxazole group components in their molecules are produced.
Condensation products having imide groups and benzoxazole groups are effective as positive photoresists. The benzoxazole groups readily decompose to form positive images by exposure to light in the presence of a photoacid generator and development-in an alkaline solution.
Aromatic diamines having an amino group and a phenolic hydroxyl group in ortho position to each other include 1-hydroxy-2,4-diaminobenzene, 1-hydroxy-2,5-diaminobenzene, 3,3'-dihydroxybenzidine, 3,3'-dihydroxy-4,4'-diaminodiphenyl ether, 1,4-bis (3-hydroxy-4-aminophenoxy)benzene, 2,2-bis (4-amino-3-hydroxyphenyl)propane, bis (3-amino-4-hydroxyphenyl)propane, bis (3-amino-4-hydroxyphenyl) sulfide, bis (3-amino-4-hydroxyphenyl)sulfone, and 2,2'-bis (3-amino-4-hydroxyphenyl)hexafluoropropane. These aromatic diamines can be used alone or in combination.
The polycondensation products containing imide groups and benzoxazole groups are cast and heated at 90°C to form a film. When this film is heat-treated at 300-350°C, the benzoxazole groups are converted into imide groups to form a wholly aromatic polyimide.

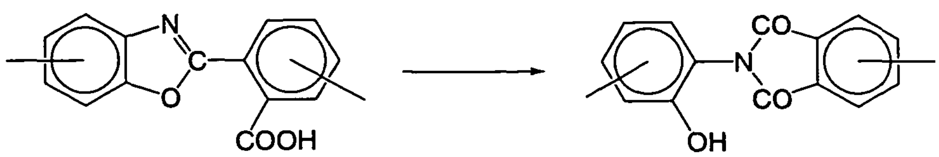

oxazole group
($1645m^{-1}$ ir)

imide group
($1774m^{-1}$ ir)

A process for forming a positive image is described below.

I. PMDA and 3,3'-diamino-4,4'-dihydroxydiphenyl sulfone are heated at 160-200°C in the presence of an acid catalyst-in an NMP solution to produce a polycondensation product having imide groups and benzoxazole groups in the molecule.

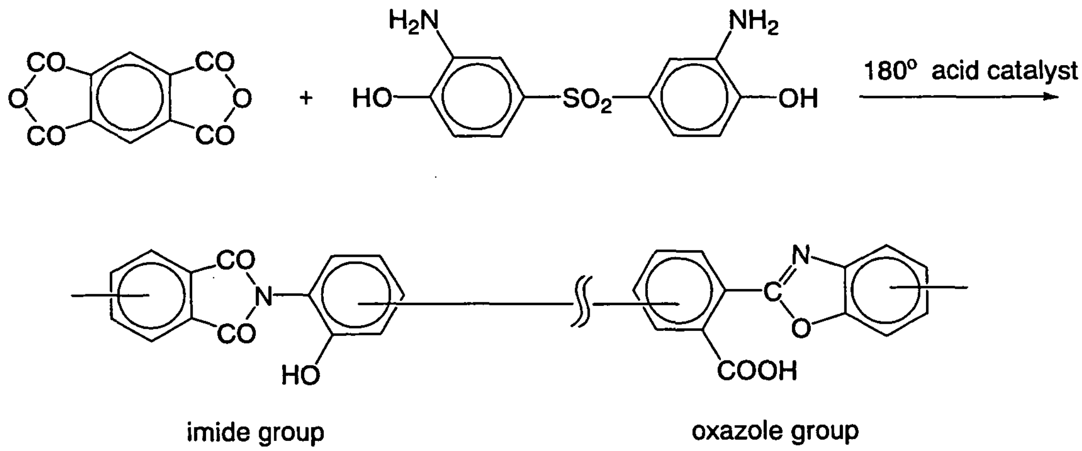


II. The polycondensation product is prebaked in the presence of a photoacid generator and then exposed to light through a resist film, whereby the oxazole groups are readily excited.

III. The benzoxazole groups decompose to form a positive image by development in an alkaline solution.

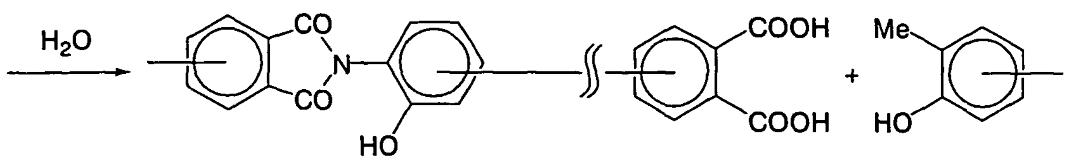


The following examples further illustrate the present invention. However, the present invention is not solely limited to these examples, since various characteristic polycondensation products are obtained by combining various acid dianhydrides and aromatic diamines.

[Example 1]

A 3-neck separable glass flask fitted with a stainless steel anchor stirrer was connected to a condenser tube equipped with balls and a water trap. The flask was heated in a silicone oil bath and stirred under a stream of nitrogen gas.

The 3-neck flask was charged with 17.45 g (80 mmol) of pyromellitic dianhydride (hereinafter referred to as PMDA), 14.66 g (120 mmol) of 2,4-diaminotoluene (hereinafter referred to as DAT), 1.0 g (10 mmol) of γ-valerolactone, 1.6 g (20 mmol) of pyridine, 212 g of N-methylpyrrolidone (hereinafter referred to as NMP), and 30 g of toluene, and heated in a silicone bath at a temperature of 180°C for 1 hour with stirring at 180 r.p.m. under a stream of nitrogen gas. A 20 ml water-toluene fraction was removed. The flask was allowed to cool for 1 hour with stirring. Then, 8.0 1g (40 mmol) of 3,4'-diaminodiphenyl ether and then 23.54 g (80 mmol) of 3,4,3',4'-biphenyltetracarboxylic dianhydride were added. Then, 100 g of NMP and 10 g of toluene were added. After stirring at room temperature for 30 minutes, the reaction vessel was heated in a silicone oil bath at 180°C with stirring at 180 r.p.m. under a stream of nitrogen gas. The reaction was continued for 3 hours to give a 20% by weight polyimide solution.

A part of the reaction solution was applied on a glass plate and dried by heating in an infrared oven at 90°C to give a strong film.

A part of the reaction solution was diluted with dimethylformamide and the molecular weight and molecular weight distribution were determined by high speed liquid chromatography (available from Tosoh Corporation). The molecular weight measurements based on polystyrene standards showed peak molecular weight (M) 52,000, number average molecular weight (Mn) 23,400, and weight average molecular weight (Mz) 365,800, resulting in a single curve with Mw/Mn = 3.12, Mz/Mn = 15.7. Thermal analysis was performed using a thermal analyzer TGA-50 and a differential scanning calorimeter (DSC) available from Shimadzu Corporation. Thermal decomposition onset temperature $T_m$ was 528°C and the temperature at which a 5% weight loss was observed was 504°C, while Tg was unknown by DSC.

[Example 2]

A solution of a polycondensation product was prepared by the procedure described in Example 1A flask was charged with 5.46 g (25 mmol) of PMDA, 17.43 g (50 mmol) of 9,9-bis (4-aminophenyl)fluorene, 1.0 g (10 mmol) of γ-valerolactone, 1.6 g (20 mmol) of pyridine, 20 g of NMP, and 30 g of toluene. The flask was heated in a silicone bath at a temperature of 180°C for 1 hour at 180rpm. The silicone bath was removed and the reaction solution was allowed to cool for 1 hour, and then 12.97 g (25 mmol) of 2,2-bis[4-(4-aminophenoxy)phenyl]hexafluoropropane and 9.11 g (25 mmol) of 2,2-bis[4- (3-amino-4-hydroxyphenyl)]hexafluoropropane were added, followed by 33.32 g (75 mmol) of 2,2-bis (3,4-dicarboxyphenyl)1,1,1,3,3,3-hexafluoropropane dianhydride, 100 g of NMP, and 10 g of toluene. The flask was heated in a silicone oil bath at 180°C for 4 hours with stirring at 160 rpm. A 25% by weight polyimide solution was produced. The reaction solution was cast on a glass plate and dried at 90°C to give a strong film.
The molecular weight and molecular weight distribution were determined by GPC. The results showed M 92,700, Mn 32,800, Mw 101,800, Mz 207,900, Mw/Mn = 3.15, and Mz/Mn = 6.44.
Thermal analysis was performed. $T_m$ was 518°C, and the temperature at which a 5% weight loss was observed was 459°C, while Tg was unknown by DSC.
The IR spectrum showed absorption bands at 1780 $cm^{-1}$ (absorption by imide bond), 1720 $cm^{-1}$ (absorption by carbonyl), and 1645 $cm^{-1}$ (absorption by oxazole).

[Example 3]

A solution of a polycondensation product was prepared by the procedure as described in Example 1.
A flask was charged with 8.73 g (40 mmol) of PMDA, 9.78 g (80 mmol) of DAT, 1.0 g (10 mmol) of γ-valerolactone, 1.6 g (20 mmol) of pyridine, 148 g of NMP, and 30 g of toluene.
After the mixture was reacted at 180°C for 1 hour at 160 rpm, the reaction solution was allowed to cool. After 1 hour, 8.50 g (40 mmol) of 3,3'-dimethylbenzidine, then 23.0 g (80 mmol) of 3,4,3',4'-biphenyltetracarboxylic dianhydride were added, followed by 100 g of NMP and 10 g of toluene.
The flask was stirred at 160 rpm for 45 minutes at room temperature, and then reacted in a silicone bath at 180°C for 3 hours at 160 rpm to give a 20% by weight polyimide solution.
A part of the reaction solution was cast and dried to give a strong film.
Molecular weight measurements by GPC showed M 45,100, Mn 22,600, Mw 55,800, Mz 104,300, Mw/Mn=2.47, Mz/Mw=4.62.
Thermal analysis was performed. Thermal decomposition onset temperature $T_m$ was 528°C.
Tg was unknown by DSC analysis.

[Example 4]

A polycondensation product was synthesized by the procedure as described in Example 1.
A flask was charged with 5.46 g (25 mmol) of PMDA, 14.60 g (50 mmol) of 1,3-(bis-aminophenoxy)benzene, 1.0 g (10 mmol) of γ-valerolactone, 1.6 g (20 mmol) of pyridine, 150 g of NMP, and 30 g of toluene.
The mixture was reacted at 180°C for 1 hour at 160 rpm, and the reaction solution was allowed to cool for 1 hour, and then 5.01 g (25 mmol) of 3,4'-diaminodiphenyl ether, 5.01 g (25 mmol) of 4,4'-diaminodiphenyl ether, then 22.70 g (75 mmol) of 3,4,3',4'-biphenyltetracarboxylic dianhydride were added, followed by 129 g of NMP and 10 g of toluene. The flask was stirred at room temperature for 35 minutes, and then heated at 175°C for 3 hours and 30 minutes with stirring at 165 rpm. A 15% by weight polyimide solution was produced. A part of the reaction solution was applied on a glass plate and heated at 90°C for 1 hour to give a strong film.
The molecular weight was determined by GPC. The results showed M 42,000, Mn 15,700, Mw 33,500, Mz 46,400, Mw/Mn = 2.14, Mz/Mn = 2.96.
Thermal analysis was performed. Thermal decomposition onset temperature Tm was 534°C, and the temperature at which a 5% weight loss was observed was 544°C. DSC analysis showed glass transition temperatures of Tg=219°C, and 318°C (melt).

[Example 5]

A polycondensation product was obtained by the procedure as described in Example 1.
A flask was charged with 5.46 g (25 mmol) of PMDA, 17.43 g (50 mmol) of 9,9-bis (4-aminophenyl)fluorene, 1.0 g (10 mmol) of γ-valerolactone, 1.6 g (20 mmol) of pyridine, then 150 g of NMP and 30 g of toluene. The flask was stirred at room temperature for 1 hour, and heated and stirred under a nitrogen stream. After the mixture was reacted at 180°C for 1 hour at 165rpm, the reaction solution was allowed to cool for 1 hour and then, 5.31 g (25 mmol) of 4,4'-dimethylbenzidine, 14.72 g (50 mmol) of 3,4,3',4'-biphenyltetracarboxylic-dianhydride, 78 g of NMP, and 10 g of toluene were added. The flask was stirred at room temperature for 30 minutes. The flask was immersed in an oil bath at 180°C for 10 minutes to completely dissolve insoluble materials. After stirring for 30 minutes, the flask was heated at 175°C for 3 hours and 15minutes with stirring at 160 rpm.

A15 % by weight polyimide solution was produced. The solution was cast and dried to give a pale yellow strong film.

Molecular weight measurements by GPC showed M 64,300, Mn 27,200, Mw 68,300, Mz 120,900, Mw/Mn=2.51, Mz/Mn=4.46.

Thermal analysis was performed. Thermal decomposition onset temperature $T_m$ was 531°C, and the temperature at which a 5% weight loss was observed was 537°C, while no exact value for Tg could be obtained by DSC analysis.

[Example 6]

A solution of a polycondensation product was obtained by the procedure as described in Example 1.

A flask was charged with 5.46 g (25 mmol) of PMDA, 21.63 g (50 mmol) of bis[4- (3-aminophenoxy)phenyl] sulfone, 1.0 g (10 mmol) of γ-valerolactone, 1.6 g (20 mmol) of pyridine, 150 g of NMP, and 30 g of toluene. After stirring at room temperature for 1 hour, the mixture was reacted at 180°C for 1 hour at 160rpm. After the reaction solution was allowed to cool for 1 hour, 16.12 g (50 mmol) of 3,4,3',4'-benzophenonetetracarboxylic dianhydride, 9.16 g (25 mmol) of 2,2-bis[4- (3-amino-4-hydroxyphenyl)]hexafluoropropane, 68 g of NMP, and 10g of toluene were added, and the mixture was stirred for 30 minutes at room temperature. Then, the flask was heated at 170°C for 3 hours and 15 minutes with stirring at 165 rpm to give a polyimide solution at a concentration of 19%. This afforded a pale yellow strong film.

Molecular weight measurements by GPC showed M 99,900, Mn 20,500, Mw 223,900, Mz 703,500, Mw/Mn=10.91, Mz/Mn=34.2g.

Thermal analysis was performed. Thermal decomposition onset temperature $T_m$ was 531°C, and the temperature at which a 5% weight loss was observed was 430°C. DSC analysis showed glass transition temperatures 229°C, 275-360°C.

[Example 7]

A polyimide solution was synthesized by the procedure as described in Example 1.

A flask was charged with 14.72g (50 mmol) of 3,4,3',4'-biphenyltetracarboxylic dianhydride, 3.05g (25 mmol) of diaminotoluene, 1.0g (10 mmol) of γ-valerolactone, 1.6g (20 mmol) of pyridine, 100g of NMP, and 30g of toluene. The flask was stirred at room temperature for 1 hour under a stream of nitrogen gas, and then heated at 180°C for 1 hour with stirring at 170 rpm. After the reaction solution was allowed to cool for 1 hour, 5.01g (25 mmol) of 3,4'-diaminodiphenyl ether, 7.01g (25 mmol) of bis[3-amino-4-hydroxyphenyl]sulfone and 5.46g (25 mmol) of PMDA were added, followed by 34g of NMP and 10g of toluene. After stirring for 30 minutes at room temperature, the flask was heated at 180°C for 2 hours with stirring at 170 rpm to give a polyimide solution at a concentration of 20%. This showed yellow and strong film characteristics.

Molecular weight measurements by GPC showed M 55,800, Mn 23,200, Mw 71,200, Mz 282,300, M w/Mn=3.07 Mz/Mn=12.19

Thermal analysis was performed. Thermal decomposition temperatures were $T_m$=421°C and $T_m$=568°C, whereby a 5% weight loss was observed at 403°C.

DSC analysis showed glass transition temperature Tg=278°C.

The IR spectrum showed absorption bands at 1780 $cm^{-1}$ (imide bond), 1720 $cm^{-1}$ (adsorption by CO), and 1645 $cm^{-1}$ (absorption by benzoxazole).

[Example 8]

Image formation by exposure to light:

The polyimide solution in NMP of Example 2 was diluted from 25% by weight to 15% by weight with NMP. To 20g of the solution (polyimide content 3 g) filtered through a membrane filter having a pore size of 1 µm was added 0.6 g of a photoacid generator (an ester of 2,3,4-trihydroxybenzophenone and 1,2-naphthoquinone-2-diazido-5-sulfonic acid) in a dark room to prepare a homogeneous solution. This solution was applied on the surface of a silicon wafer having a diameter of 5 cm by spin coating under the conditions of 5 seconds (stop) - 20 seconds (200 r.p.m.) - 5 seconds (stop) - 30 seconds (1700 r.p.m.)-5 seconds (stop) followed by heat treatment in an infrared heater at 90°C for 10 minutes (prebaking). The film thickness after prebaking was 4.5 µm. A through-hole and line and space pattern was used as a test pattern (10, 15, 20, ..., 100 µm) for a positive photomask on this photosensitive coating film to expose

the film to light from a 2 Kw high-pressure mercury lamp (JP200G available from ORC Manufacturing Company Ltd.) at an exposure dose capable of generating an image.

(a) After exposure at 440 mJ/$cm^2$, the coating film was immersed in a mixed solution of 40 g of NMP, 40 g of aminoethanol and 40 g of water (hereinafter referred to as solution Ao) at 35°C for 7 seconds, and then washed with deionized water and dried in an infrared dryer at 90°C for 30 minutes and 180°C for 30 minutes, after which the resolution was observed. The film thickness was 4 μm. A sharp positive image having a line and space dimension of 10 μm was observed.
(b) After exposure at 400mJ/$cm^2$, the coating film was immersed in a 5% TMAH (tetramethylammonium hydroxide) solution at room temperature for 10 seconds and washed with deionized water, and then dried at 90°C for 30 minutes, then 180°C for 30 minutes to give a sharp positive image having a line and space dimension of 10 μm.

[Example 9]

Positive images were formed by the procedure as described in Example 8.
A mixture of 20 g of the polyimide solution (20% by weight) of Example 6 and 2 g of anisole was filtered through a membrane filter having a pore size of 1 μm. To this solution was added 0.2 g of a photoacid generator (an ester of 2,3,4-trihydroxybenzophenone and 1,2-naphthoquinone-2-diazido-5-sulfonic acid) in a dark room to prepare a homogeneous solution. This solution was spin coated on a silicon wafer to form a coating, which was then heat treated at 90°C for 10 minutes to give a film of 5.33 μm.

(a) After exposure at 350mJ/$cm^2$, the coating film was immersed in solution Ao for 10 seconds and washed with water, and then dried at 90°C for 30 minutes, then 180°C for 30 minutes. The film thickness was 3.56 μm. A sharp positive image having a line and space dimension of 10 μm was observed.
(b) After exposure at 350mJ/$cm^2$, the coating film was immersed in a 5% TMAH solution for 15 seconds, and then dried at 90°C for 30 minutes, then 180°C for 30 minutes to give a film of 3.57 μm. A sharp positive image having a line and space dimension of 10 μm was observed.

[Example 10]

Positive images were formed by the procedure as described in Example 8. The polyimide solution of Example 7 (20% by weight) was diluted to 15% by weight with NMP. In 20g of this solution was dissolved 0.6 g of 1,2-naphthoquinone-2-diamide-5-sulfonic acid ester of 2,3,4-trihydroxybenzophenone. This solution was spin-coated on a silicon wafer (5 cm diameter). [spin-coating conditions: 5 seconds (stop) - 20 seconds (200 r.p.m.) - 5 seconds (stop) - 30 seconds (3000 r.p.m.) - 5 seconds (stop)]. The coating was heated at 90°C for 10 minutes to form a film of 5.07 μm.

(a) After exposure at 500mJ/$cm^2$, the exposed film was immersed in solution Ao for 1 minute and then washed with water, and then dried at 90°C for 30 minutes, then 180°C for 3 minutes. A sharp positive image having a line and space dimension of 10 μm was observed on this film.
(b) After exposure at 500mJ/$cm^2$, the film was immersed in a 5% TMAH solution for 3 minutes. The film was washed with water, and then dried by heating at 90°C for 30 minutes and 180°C for 30 minutes. A sharp positive image having a line and space dimension of 10 μm was observed.

[Example 11]

A 3-neck separable glass flask fitted with a stainless steel anchor stirrer was connected to a condenser tube equipped with balls and a water trap. The flask was heated in a silicone oil bath and stirred under a stream of nitrogen gas.
The flask was charged with 10.91 g (50 mmol) of pyromellitic dianhydride (hereinafter referred to as PMDA), 9.17 g (25 mmol) of 2,4-diaminotoluene (hereinafter referred to as DAT), 1.0 g (10 mmol) of γ-valerolactone, 1.6 g (20 mmol) of pyridine, 100 g of N-methylpyrrolidone (hereinafter referred to as NMP), and 30 g toluene. After stirring at 160r.p.m for 1 hour at room temperature, the flask was heated at 180°C for 1 hour with stirring at 156 r.p.m. A 15 ml toluene-water fraction was removed. After the flask was allowed to cool for 1 hour with stirring, 16.12 g of 3,4,3',4'-benzophenonetetracarboxylic dianhydride (hereinafter referred to as BTDA) and 5.31 g (25 mmol) of 3,3'-dimethylbenzidine were added, followed by 90 g of NMP and 10 g of toluene, and the mixture was stirred for 30 minutes at room temperature, and then heated at 180°C for 2 hours and 30 minutes with stirring at 156 r.p.m. to give a 20% by weight polyimide solution.
A part of the reaction solution was cast on a glass plate and heated in an infrared oven at 90°C for 1 hour

and 180°C for 1 hour to give a yellowish brown film.

A part of the solution was diluted with dimethylformamide and the molecular weight and molecular weight distribution were determined by high speed liquid chromatography (available from Tosoh Corporation).

The molecular weight measurements based on polystyrene standards showed peak molecular weight (M) 34.200, number average molecular weight (Mn) 15.800, weight average molecular weight (Mw) 57.000, Z average molecular weight (Mz) 259.000, Mw/Mn = 3.60, Mz/Mn = 16.38.

Thermal analysis was performed using a thermal analyzer TGA-50 and a differential scanning calorimeter (DSC) available from Shimadzu Corporation. Thermal decomposition onset temperature $T_m$ was 509°C. Glass transition temperature Tg was not specified by DSC analysis.

[Example 12]

A solution of a polycondensation product was obtained by the procedure as described in Example 11.

A 3-neck glass flask was charged with 5.40 g (25 mmol) of PMDA, 6.11 g (50 mmol) of DAT, 1.0 g (1.0 mmol) of γ-valerolactone, 1.6 g (20 mmol) of pyridine, 100 g of NMP, and 30 g of toluene in the same manner as in Example 1.

After stirring at 160 r.p.m. for 1 hour at room temperature, the flask was heated in a silicone oil bath at 180°C for 1 hour with stirring at 160 r.p.m. The flask was allowed to cool and stirred at 150 r.p.m. A 20 g toluene-water fraction was removed. While slowly stirring at room temperature, powders of 3.81 g (25 mmol) of 3,5-diaminobenzoic acid and 10.82 g (25 mmol) of bis[4- (3-aminophenoxy)phenyl]sulfone were added, followed by 24.17 g (75 mmol) of BTDA. Further, 150 g of NMP and 10 g of toluene were added. After stirring at 160 r.p.m. for 1 hour at room temperature, the flask was heated at 180°C for 4 hours with stirring at 160 r.p.m. to give a solution containing 20% by weight of a polyimide.

Molecular weight measurements by GPC based on polystyrene standards showed M 48.400, Mn 20.000, Mw 99.600, Mz 310.700, Mw/Mn=4.97, Mz/Mn=15.51.

Thermal analysis was performed. Thermal decomposition onset temperature Tm was 525°C, and the temperature at which a 5% weight loss was observed was 325°C.

Glass transition temperature Tg was not specified by DSC analysis.

[Example 13]

The procedure of Example 11 was repeated.

A flask was charged with 10.91 g (50 mmol) of PMDA, 9.17 g (75 mmol) of DAT, 1.0 g (10 mmol) of γ-valerolactone, 1.6 g (20 mmol) of pyridine, and then 100 g of NMP and 30 g of toluene. After stirring at 150 r.p.m. for 1 hour at room temperature, the flask was heated at 165°C for 1 hour with stirring at 180 r.p.m. A 20ml toluene-water fraction was removed. The flask was allowed to cool and then stirred for 30 minutes to 150 r.p.m, and 5.01 g (25 mmol) of 3.4'-diaminophenyl ether and 10.27 g (25 mmol) of 2.2-bis[4-(4-aminophenoxy)phenyl]propane were added, followed by 24.17 g (75 mmol) of BTDA, 124 g of NMP, and 10 g of toluene. The flask was stirred at room temperature for 30 minutes, and heated at 165°C for 5 hours with stirring at 180 r.p.m. A 20% by weight polyimide solution was obtained.

Molecular weight measurements by GPC showed M 52.000, Mn 22.000, Mw 81.200, Mz 211.000, Mw/Mn=3.69, Mz/Mn=9.57.

Thermal analysis was performed. Thermal decomposition onset temperature Tm was 484°C, and the temperature at which a 5% weight loss was observed was 478°C.

Glass transition temperature Tg by DSC was 302°C.

[Example 14]

A 18% by weight polyimide solution was obtained by the procedure as described in Example 11.

A flask was charged with 32.23 g (100 mmol) of BTDA, 6.11 g (50 mmol) of DAT, 1.5 g (15 mmol) of valerolactone, 3.2 g (30 mmol) of pyridine, 140 g of NMP and 30 g of toluene, and stirred at room temperature for 1 hour, and then heated at 180°C for 1 hour with stirring at 160 r.p.m. The flask was stirred at room temperature for 30 minutes, and 6.11 g (50 mmol) of DAT and10.01 g (50 mmol) of 3.4'-diaminodiphenyl ether were added, followed by 10.91 g (50 mmol) of PMDA, 150 g of NMP, and 10 g of toluene. After stirring at room temperature for 1 hour, the flask was heated at 180°C for 1 hour and 30 minutes with stirring at 160 r.p.m.

Molecular weight measurements by GPC showed M 32.000, Mn 13.800, Mw 86.400, Mz 57.800, Mw/Mn=6.27, Mz/Mn=41.9.

The film characteristics were slightly inferior because of the short reaction period of 1 hour and 30 minutes. Thus, heating for 3 hours or more is required to make a strong film.

[Example 15]

A 20% by weight block polyimide solution was obtained by the procedure as described in Example 11.

A flask was charged with 16.12 g (50 mmol) of BTDA, 10.82 g (25 mmol) of bis[4- (3-aminophenoxy)phenyl] sulfone, 1.0 g (10 mmol) of valerolactone, 1.6 g (20 mmol) of pyridine, 100 g of NMP, and 30 g of toluene, and stirred at 150 r.p.m for 30 minutes at room temperature. Then, the flask was heated at 175°C for 1 hour with stirring at 160 r.p.m. The flask was allowed to cool and then stirred for 30 minutes, and 9.17 g (75 mmol) of DAT, then 10.91 g (50 mmol) of PMDA, and then 74 g of NMP and 10 g of toluene were added while stirring at 130 r.p.m. After stirring for 1 hour at room temperature, the flask was heated at 180°C for 2 hours and 30 minutes with stirring at 155 r.p.m.

Molecular weight measurements by GPC showed M 39.300, Mn 18.700, Mw 86.200, Mz 352.000, Mw/Mn=4.62, Mz/Mn=19.1.

Thermal analysis was performed. The thermal decomposition onset temperature was 506°C.

Tg by DSC was not definite.

[Example 16]

The procedure of Example 11 was repeated.

A flask was charged with 16.12 g (50 mmol) of BTDA, 10.27 g (25 mmol) of 2,2-bis[4- (4-aminophenoxy) phenyl]propane, 1.0 g (10 mmol) of valerolactone, 1.6 g (20 mmol) of pyridine, 100 g of NMP, and 30 g of toluene, and stirred at 155 r.p.m for 1 hour at room temperature to dissolve the materials. Then, the flask was heated at 175°C for 1 hour with stirring at 155 r.p.m, and stirred at room temperature for 30 minutes. While stirring (120 r.p.m), 3.06 g (25 mmol) of DAT and 5.01 g (25 mmol) of 3,4'-diaminodiphenyl ether were added, followed by 5.46 g (25 mmol) of PMDA, 115 g of NMP and 10 g of toluene. After stirring at room temperature for 30 minutes to dissolve the materials, the flask was heated at 175°C for 4 hours with stirring at 155 r.p.m. This polyimide solution was 17% by weight. A part of this solution was cast on a glass plate and heated at 90°C for 1 hour and 180°C for 1 hour to give a strong film.

Molecular weight measurements by GPC showed M45.100, Mn19.100, Mw128.100, Mz579.000, Mw/Mn=6.70, Mz/Mn=30.3.

Glass transition temperature Tg by DSC was 223°C.

ADVANTAGES OF THE INVENTION

Polyimides containing PMDA are normally solvent-insoluble.

When PMDA (1 mole) is reacted with a certain type of diamine (2-1.5 moles), an oligomer solubilized at 15% by weight in solution is obtained. On the basis of this result, four-component or higher solvent-soluble polyimide block copolymers can be obtained by sequential polymerization reactions using binary acid catalysts. A number of solvent-soluble polyimides containing PMDA are synthesized. Condensation products of an aromatic diamine having an amino group and a phenol group in the ortho positions with a tetracarboxylic dianhydride are useful as positive photoresists. Such compounds are condensation products having benzoxazole groups and polyimide groups in their molecules, rather than polyimides.

## Claims

**1.** A polyimide block copolymer composition for use as a film, photosensitive polyimide, film insulating varnish, photoresist, electroplating polyimide, printing varnish, sealant or adhesive, comprising:

(a) a four-component or higher polyimide block copolymer containing pyromellitic dianhydride, obtained by reacting an oligomer terminated with diamines at both ends, which is a reaction product of pyromellitic dianhydride (1 mole) and diaminotoluene (1.5-2 moles), with an acid dianhydride other than pyromellitic dianhydride and an aromatic diamine, wherein the molar ratio between the molar ratio of the total aromatic diamines to the total acid dianhydrides is 1-0.95; and
(b) a polar solvent containing a hydrocarbon.

**2.** A polyimide block copolymer composition for use as a film, photosensitive polyimide, film insulating varnish, photoresist, electroplating polyimide, printing varnish, sealant or adhesive, comprising:

(a) a four-component or higher polyimide block copolymer containing pyromellitic dianhydride, obtained by reacting an oligomer terminated with acid dianhydrides at both ends, which is a reaction product of an acid

dianhydride other than pyromellitic dianhydride (2 moles) and an aromatic diamine (1-1.5 moles), with pyromellitic dianhydride and an aromatic diamine, wherein the molar ratio of the aromatic diamine to pyromellitic dianhydride is 1.5-2 and the molar ratio of the total aromatic diamines to the total acid dianhydrides is 1-0.95; and

(b) a polar solvent containing a hydrocarbon.

**3.** A polycondensation product composition containing pyromellitic dianhydride and having benzoxazole groups and imide groups for use as a film, photosensitive polyimide, film insulating varnish, photoresist, electroplating polyimide, printing varnish, sealant or adhesive, comprising:

(a) a four-component or higher polycondensation product containing pyromellitic dianhydride and having benzoxazole groups and imide groups, obtained by reacting an oligomer terminated with diamines at both ends, which is a reaction product of pyromellitic dianhydride (1 mole) and diaminotoluene (1.5-2 moles), with an acid dianhydride other than pyromellitic dianhydride and an aromatic diamine having a hydroxyl group and an amino group in the ortho positions, wherein the molar ratio of the total aromatic diamines to the total acid dianhydrides is 1-0.95; and

(b) a polar solvent containing a hydrocarbon.

**4.** A four-component or higher polycondensation product composition containing pyromellitic dianhydride and having benzoxazole groups and imide groups for use as a film, photosensitive polyimide, film insulating varnish, photoresist, electroplating polyimide, printing varnish, sealant or adhesive, comprising:

(a) a four-component or higher polycondensation product containing pyromellitic dianhydride and having benzoxazole groups and imide groups, obtained by reacting an oligomer terminated with acid dianhydrides at both ends, which is a reaction product of an acid dianhydride other than pyromellitic dianhydride (2 moles) and an aromatic diamine having a hydroxyl group and an amino group in the ortho positions (1-1.5 moles), with pyromellitic dianhydride and an aromatic diamine having a hydroxyl group and an amino group in the ortho positions, wherein the molar ratio of the aromatic diamine to pyromellitic dianhydride is 1.5-2 and the molar ratio of the total aromatic diamines to the total acid dianhydrides is 1-0.95; and

(b) a polar solvent containing a hydrocarbon.

**5.** A process for preparing a four-component or higher polyimide block copolymer solution containing pyromellitic dianhydride, comprising:

(a) a first step of reacting pyromellitic dianhydride (1 mole) and diaminotoluene (1.5-2 moles) in a polar solvent containing a hydrocarbon at 160-200 °C in the presence of an acid catalyst to give an oligomer terminated with diamines at both ends; and

(b) a second step of adding an acid dianhydride other than pyromellitic dianhydride and an aromatic diamine to the reaction product and heating the mixture at 160-200 °C to react it, wherein the molar ratio of the total aromatic diamines to the total acid dianhydrides is 1-0.95.

**6.** The process for preparing a polyimide block copolymer solution of claim 5, wherein a member selected from the group consisting of 3,3'-diaminodiphenyl sulfone, 1,3-bis (3-aminophenoxyphenyl)benzene, bis[4-(3-aminophenoxy)phenyl]sulfone, 9,9-bis (4-aminophenyl)fluorene, 3,5-diaminobenzoic acid, 3,4'-diaminodiphenyl ether, bis (3-amino-4-hydroxyphenyl)sulfone, and 2,2-bis(3-amino-4-hydrnoxyphenyl)hexafluoropropane is used in place of the diaminotoluene.

**7.** A process for preparing a four-component or higher polyimide block copolymer solution containing pyromellitic dianhydride, comprising:

(a) a first step of reacting an acid dianhydride other than pyromellitic dianhydride (2 moles) and an aromatic diamine (1-1.5 moles) in a polar solvent containing a hydrocarbon at 160-200 °C in the presence of an acid catalyst to give an oligomer terminated with acid dianhydrides at both ends; and

(b) a second step of adding pyromellitic dianhydride and an aromatic diamine to the reaction product and heating the mixture at 160-200 °C, wherein the molar ratio of the aromatic diamine to pyromellitic dianhydride is 1.5-2 and the molar ratio of the total aromatic diamines to the total aromatic tetracarboxylic acid dianhydrides is 1-0.95.

**8.** The process of claim 5 or 7 wherein the hydrocarbon is selected from the group consisting of toluene, xylene and mixtures thereof; the polar solvent is selected from the group consisting of N-methylpyrrolidine, N,N-dimethylacetamide, N,N-dimethylformamide, N-methylformamide, tetramethylurea, dimethyl sulfoxide, sulfolane and mixtures thereof; and the amount of the polyimide block copolymer to be dissolved in the polar solvent containing a hydrocarbon is 10% by weight or more, preferably 15-25% by weight.

**9.** The process of claim 5 or 7 wherein the acid catalyst is a binary catalyst consisting of γ-valerolactone and pyridine or methylmorpholine.

**10.** The process of claim 5 wherein the acid dianhydride other than pyromellitic dianhydride is 3,4,3',4'-biphenyltetracarboxylic dianhydride, 3,4,3',4'-benzophenonetetracarboxylic dianhydride, 2,2-bis (3,4-dicarboxyphenyl)-1,1,1,3,3,3-hexafluoropropane dianhydride, 3,4-dicarboxyphenyl sulfone anhydride, bis (3,4-dicarboxyphenyl) ether anhydride, or 2,3,6,7-naphthalenetetracarboxylic anhydride.

**11.** A process for preparing a four-component or higher polycondensation product containing pyromellitic dianhydride and having benzoxazole groups and imide groups, comprising:

(a) a first step of reacting pyromellitic dianhydride (1 mole) and diaminotoluene (1.5-2 moles) in a polar solvent containing a hydrocarbon at 160-200°C in the presence of an acid catalyst to give an oligomer terminated with diamines at both ends; and
(b) a second step of adding an acid dianhydride other than pyromellitic dianhydride and an aromatic diamine having a hydroxyl group and an amino group in the ortho position to the reaction product and heating the mixture at 160-200°C to react it, wherein the molar ratio of the total aromatic diamines to the total acid dianhydrides is 1-0.95.

**12.** A process for preparing a four-component or higher polycondensation product containing pyromellitic dianhydride and having benzoxazole groups and imide groups, comprising:

(a) a first step of reacting an acid dianhydride other than pyromellitic dianhydride (2 moles) and an aromatic diamine having a hydroxyl group and an amino group in the ortho positions (1-1.5 moles) in a polar solvent containing a hydrocarbon at 160-200 °C in the presence of an acid catalyst to give an oligomer terminated with acid dianhydrides at both ends; and
(b) a second step of adding pyromellitic dianhydride and an aromatic diamine to the reaction product and heating the mixture at 160-200°C, wherein the molar ratio of the aromatic diamine having a hydroxyl group and an amino group in the ortho positions to pyromellitic dianhydride is 1.5-2 and the molar ratio of the total aromatic diamines to the total aromatic tetracarboxylic acid dianhydrides is 1-0.95.

**13.** The process of claim 11 or 12 wherein the aromatic diamine having a hydroxyl group and an amino group in the ortho positions is selected from the group consisting of 3,3'-dihydroxybenzidine, 3,3'-dihydroxy-4,4'-diaminodiphenyl ether, 1,4-bis (3-hydroxy-4-aminophenyl)benzene, 2,2-bis (3-amino-4-hydroxyphenyl)propane, bis (3-amino-4-hydroxyphenyl)sulfone, 2,4-diaminophenol, 2,5-diaminophenol, and 2,2-bis[4- (3-amino-4-hydroxyphenyl)]hexafluoropropane.

**14.** A polyimide block copolymer composition for use as a film, photosensitive polyimide, insulating varnish, electroplating polyimide, printing varnish, sealant or adhesive, comprising:

(a) a four-component or higher polyimide block copolymer obtained by reacting an oligomer terminated with diamines at both ends, which is a reaction product of pyromellitic dianhydride (1 mole) and diaminotoluene (1.5-2 moles), with benzophenonetetracarboxylic dianhydride and an aromatic diamine, wherein the molar ratio of the total aromatic diamines to the total acid dianhydrides is 1.00-0.95; and
(b) a polar solvent containing a hydrocarbon.

**15.** A polyimide block copolymer composition for use as a film, photosensitive polyimide, insulating varnish, electroplating polyimide, printing varnish, sealant or adhesive, comprising:

(a) a four-component or higher polyimide block copolymer obtained by reacting an oligomer terminated with acid dianhydrides at both ends, which is a reaction product of benzophenonetetracarboxylic dianhydride (2 moles) and diaminotoluene (1-1.5 moles), with pyromellitic dianhydride and an aromatic diamine, wherein the

molar ratio of the aromatic diamine to pyromellitic dianhydride is 1.5-2 and the molar ratio of the total aromatic diamines to the total acid dianhydrides is 1.00-0.95; and
(b) a polar solvent containing a hydrocarbon.

**16.** A process for preparing a four-component or higher polyimide block copolymer solution, comprising:

(a) a first step of reacting pyromellitic dianhydride (1 mole) and diaminotoluene (1.5-2 moles) in a polar solvent containing a hydrocarbon at 160-200°C in the presence of an acid catalyst to give an oligomer terminated with diamines at both ends; and
(b) a second step of adding benzophenonetetracarboxylic dianhydride and an aromatic diamine to the reaction product and heating the mixture at 160-200°C to react it, wherein the molar ratio of the total aromatic diamines to the total acid dianhydrides is 1.00-0.95.

**17.** A process for preparing a four-component or higher polyimide block copolymer solution, comprising:

(a) a first step of reacting benzophenonetetracarboxylic dianhydride (2 moles) and diaminotoluene (1-1.5 moles) in a polar solvent containing a hydrocarbon at 160-200°C in the presence of an acid catalyst to give an oligomer terminated with acid dianhydrides at both ends; and
(b) a second step of adding pyromellitic dianhydride and an aromatic diamine and heating the mixture at 160-200°C to react it, wherein the molar ratio of the aromatic diamine to pyromellitic dianhydride is 1.5-2 and the molar ratio of the total aromatic diamines to the total tetracarboxylic dianhydrides is 1.0-0.95.

**18.** The process of claim 16 wherein a member selected from the group consisting of bis[4-(3-aminophenoxy)phenyl] sulfone, bis[4-(4-aminophenoxy)phenyl]sulfone, 1,3-bis (3-aminophenoxy)benzene, 9,9-bis (4-aminophenoxy)fluorene, 3,5-diaminobenzoic acid, 3,4'-diaminodiphenyl ether, 2,2-bis[3-amino-4-phenoxyphenyl] hexafluoropropane and bis(3-amino-4-phenoxyphenyl)sulfone is used in place of the diaminotoluene.

**19.** The process of claim 17 wherein a member selected from the group consisting of 4,4'-diaminodiphenyl sulfide, 2,2-bis [4-(4-aminophenoxy)phenyl]propane, 2,2-bis[4-(4-aminophenoxy)phenyl]hexafluoropropane, bis[4-(3-aminophenoxy)phenyl]sulfone, bis[4- (4-aminophenoxy)phenyl]sulfone, 1,3-bis (3-aminophenoxy)benzene, 9,9-bis (4-aminophenoxy)fluorene, 3,5-diaminobenzoic acid, 3.4'-diaminodiphenyl ether, 2,2-bis[3-amino-4-phenoxyphenyl] hexafluoropropane and bis(3-amino-4-phenoxyphenyl)sulfone is used in place diaminotoluene.

**20.** The process of claim 16 wherein the acid catalyst is a binary catalyst consisting of (a) γ-valerolactone and (b) pyridine and/or N-methylmorpholine.

**21.** The process of claim 16 or 17 wherein the hydrocarbon is toluene and/or xylene; and the polar solvent is a liquid containing one or two members selected from the group consisting of N-methylpyrrolidone, N,N-dimethylacetamide, N,N-dimethylformamide, dimethyl sulfoxide, tetramethylurea and sulfolane.

**22.** The process of claim 21 wherein the polyimide block copolymer is 10% by weight or more, preferably 15-25% by weight based on the total weight of the solution.

**23.** The process of claim 14 or 15 wherein the polar solvent is selected from the group consisting of N-methylpyrrolidone, N-methylformamide, N,N-dimethylformamide, N-methylacetamide, N,N-dimethylacetamide, tetramethylurea, dimethyl sulfoxide, and sulfolane.

## INTERNATIONAL SEARCH REPORT

International application No.
PCT/JP03/02343

A. CLASSIFICATION OF SUBJECT MATTER
Int.Cl[7] C08L79/08, C08G73/22

According to International Patent Classification (IPC) or to both national classification and IPC

B. FIELDS SEARCHED

Minimum documentation searched (classification system followed by classification symbols)

Documentation searched other than minimum documentation to the extent that such documents are included in the fields searched

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X | WO 01/34679 A1 (PI R&D Co., Ltd.), 17 May, 2001 (17.05.01), Full text (Family: none) | 1-23 |
| A | JP 2001-348428 A (Toray Industries, Inc.), 18 December, 2001 (18.12.01), Full text (Family: none) | 1-23 |
| A | JP 2001-040108 A (PI R&D Co., Ltd.), 13 February, 2001 (13.02.01), Full text (Family: none) | 1-23 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 April, 2003 (02.04.03) | 15 April, 2003 (15.04.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/02343

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-147768 A (PI R&D Co., Ltd.), 26 May, 2000 (26.05.00), Full text (Family: none) | 1-23 |
| A | JP 11-202488 A (PI R&D Co., Ltd.), 30 July, 1999 (30.07.99), Full text (Family: none) | 1-23 |
| A | US 5502143 A (PI Material Research Laboratory), 26 March, 1996 (26.03.96), Full text & JP 6-192420 A & JP 7-157560 A & EP 604319 A1 & DE 69324662 D | 1-23 |
| A | JP 6-172529 A (Mitsubishi Kasei Corp.), 21 June, 1994 (21.06.94), Full text (Family: none) | 1-23 |

Form PCT/ISA/210 (continuation of second sheet) (July 1998)